# EUROPEAN PATENT APPLICATION

(11) **EP 1 046 530 A1**
(43) Date of publication of application: **25.10.2000**
(21) Application number: 00201260.7
(22) Date of filing: 06.04.2000
(51) Int. Cl.: B60J 7/05

(54) **Open roof construction for a vehicle**

(30) Priority: 22.04.1999 NL 1011863
(71) Applicant: Inalfa Industries B.V., 5804 AB Venray (NL)
(72) Inventor: Manders, Peter Christiaan Leonardus Johannes, 5961 SM Horst (NL)
(74) Representative: Metman, Karel Johannes

(57) **Abstract**

An open roof construction for a vehicle having an opening (2) in its fixed roof (1) comprises a stationary part (3) to be fixed to the roof and an adjustable closure element (4) supported by the stationary part. This closure element is adjustable between a closed position, in which it closes the roof opening, and an open position, in which it opens the roof opening on the front side. The stationary part includes at least one guide rail (5) extending in the longitudinal direction of the vehicle. The closure element is fitted with a pivot member (15) near its front side and is slidably supported by at least one sliding shoe (15) which is capable of movement in the guide rail. A correction mechanism (17) is disposed some distance behind the front sliding shoe for moving the closure element slightly in the longitudinal direction of the guide rail (5) upon pivoting movement thereof about the pivot element (15). An operating mechanism for the closure element (4) is provided for effecting the pivoting movement of the closure element and a movement of the closure element in the longitudinal direction of the guide rail (5). The operating mechanism includes an element (21) which remains at least substantially stationary during the pivoting movement of the closure element (4) and which moves along when the closure element is being moved. The correction mechanism includes a cam (19) and camway (20) assembly, wherein the cam is connected to the panel and the camway is formed on the aforesaid element of the operating mechanism.

## Description

The invention relates to an open roof construction in accordance with the preamble of claim 1.

Open roof constructions comprising correction mechanisms for correcting or compensating the position of the front side of the closure element upon pivoting movement thereof are known in various embodiments. Thus, an open roof construction having a panel as the closure element is known wherein the correction mechanism comprises a retracting rod which is connected between the panel and the element of the operating mechanism that remains stationary during the pivoting movement of the operating mechanism. This retracting rod causes the closure element to move rearwards automatically upon pivoting movement thereof. A drawback of this construction is that when high loads are exerted on the closure element, for example when driving at high speeds with the closure element in its ventilating position, the retracting rod is exposed to a high pressure load, which may cause it to buckle.

In another embodiment of an open roof construction in the form of a sliding-tilt roof, the correction mechanism includes a pin and slot assembly, wherein the pin is formed on the panel and the slot is formed in the stationary guide. The slot is open on the bottom side, so that the pin can exit the slot before the panel is moved rearwards to a position under the fixed roof.

The object of the present invention is to further improve the open roof construction of the kind referred to in the introduction.

According to the invention the open roof construction is characterized in that the correction mechanism includes a cam and camway assembly, wherein one element of said cam and camway assembly is connected to the panel and the other element is formed on the aforesaid element of the operating mechanism.

Since said cam and said camway both move along during movement of the closure element in the longitudinal direction of the guide rails, parts of the closure element that must pass a member formed on the stationary guide rail need not be taken into account in the design of the correction mechanism. Furthermore the solution according to the invention provides a possibility of keeping the cam and the camway in constant engagement with each other, thus avoiding the entry and exit of parts and the risk of problems this may involve. The cam and the camway can withstand pressure loads better than the retracting rod.

If the open roof construction is in the form of a sliding-tilt roof comprising a rigid panel, and the camway is formed on the element of the operating mechanism that moves along, the fact that the camway can be relatively high is a major advantage, because the relatively low front side of the panel need not pass over the camway upon rearward movement. Its relatively high construction makes it possible to dispose the camway further to the rear, which leads to a stable correction mechanism, whilst it hardly affects the overall height of the open roof construction, if at all, so that the loss of headroom inside the vehicle as a result of the open roof construction being built in can be limited. The cam and the camway provide a simple construction comprising few parts, so that the tolerances will remain small.

A further reduction of the tolerances and of the number of parts is achieved in an embodiment wherein the front pivoting element is a sliding shoe.

The invention will now be explained in more detail with reference to the drawing, which shows an exemplary embodiment of the open roof construction according to the invention.
Figs. 1 - 4 are longitudinal sectional views of the exemplary embodiment of the open roof construction according to the invention.
Fig. 5 is a perspective view of the main parts of the operating mechanism of the open roof construction of Figs. 1 - 4.

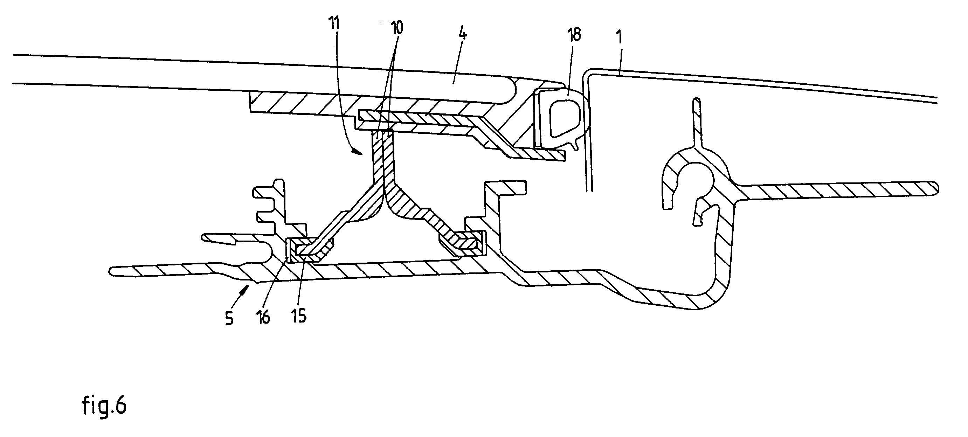

Fig. 6 is a larger-scale cross-sectional view along line VI-VI in Fig. 2.
Fig. 7 is a larger scale cross-sectional view along line VII-VII in Fig. 2.

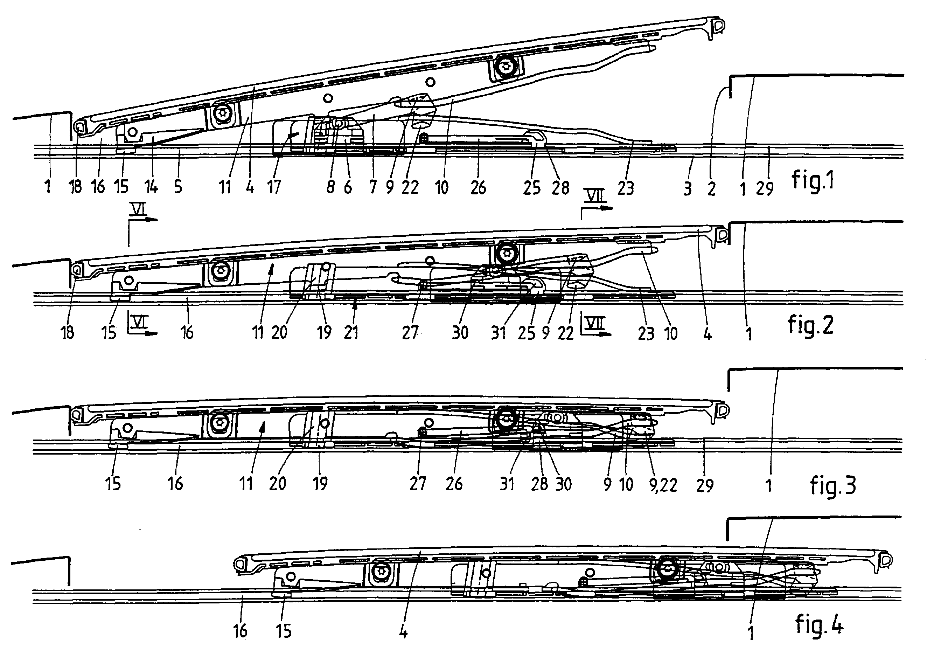

The drawings, and first of all Figs. 1 - 4, show an exemplary embodiment of the open roof construction according to the invention, which is built into a vehicle, such as a passenger car, the fixed roof 1 of which is provided with a roof opening 2. The open roof construction comprises a frame 3 or different stationary part, which can be attached to the fixed roof 1 or which is formed thereon. Said frame 3 supports, in a manner to be described in more detail hereafter, a closure element 4 which is capable of selectively closing the roof opening 2 or releasing it at least partially.

In the illustrated embodiment the open roof construction is a so-called sliding-tilt roof, wherein the closure element 4 is in the form of a transparent, rigid panel, which can be moved from the closed position in roof opening 2 (Fig. 2), on the one hand to an upwardly sloping ventilating position (Fig. 1) and on the other hand downwards (Fig. 3) and subsequently rearwards to a position under the fixed roof 1 (Fig. 4).

In order to enable these movements, panel 4 is fitted with an operating mechanism at both longitudinal edges, one of which is shown in the drawings, whereby it should be considered, however, that the same operating mechanism is present at the other longitudinal edge of panel 4 in mirror image thereof. Said operating mechanisms are disposed in guide rails 5, which are mounted in frame 3 or integrated therein and which extend on either side of the roof opening 2 and rearwards thereof under fixed roof 1. Each operating mechanism is actuated by a driving slide 6, which is guided in the associated guide rail 5 and which can be moved along guide rail 5 by means of a pull-push cable (not shown) or other connecting element which is connected to a drive unit such as an electric motor, a cranked handle or the like.

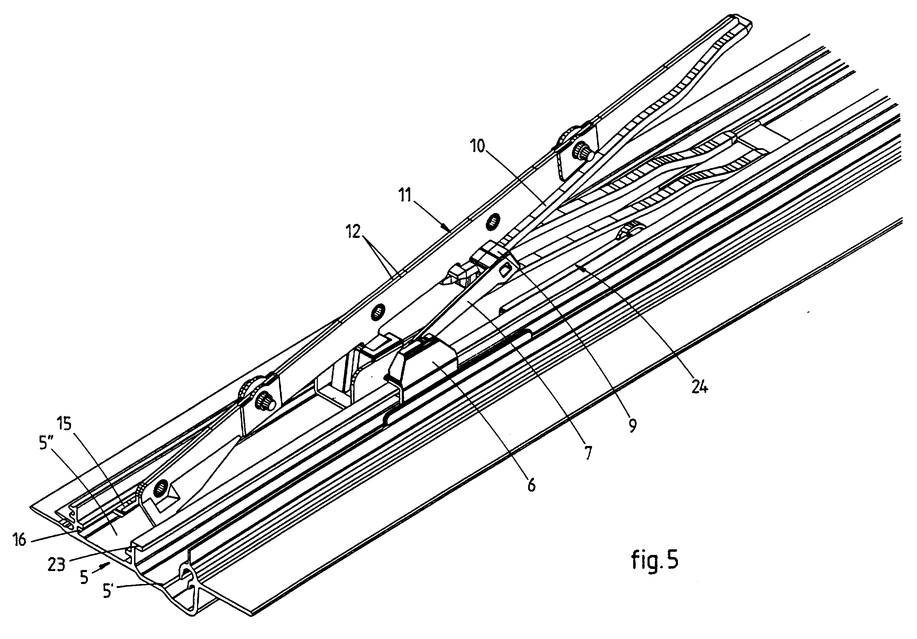

As is also clearly shown in Fig. 5, a vertically adjustable member in the form of an arm 7 is attached to the driving slide, which arm is connected to the driving slide 6 by means of a horizontal, transversely extending pivot 8. The arm 7 of driving slide 6 includes a first guide member 9 in the form of a double guide cam, which is in engagement with a guideway 10 in the form of a rib projecting in transverse direction, which is formed on a link plate 11 which is mounted on the underside of panel 4 and which extends in the longitudinal direction thereof.

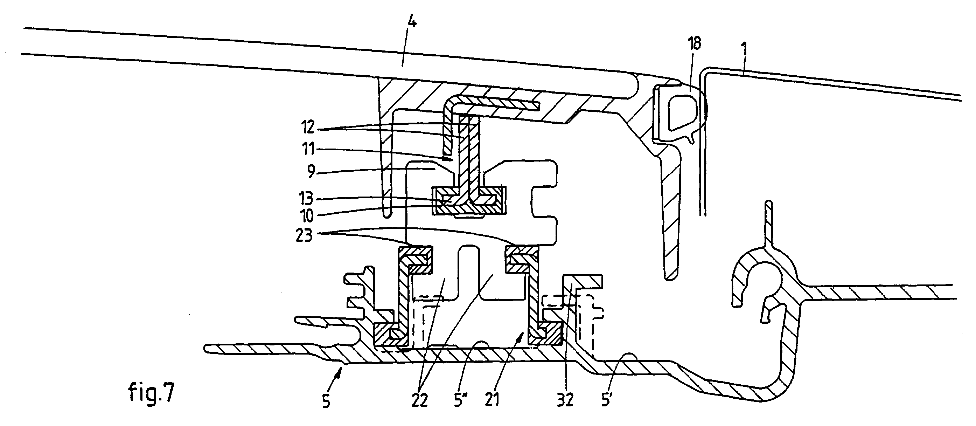

As is shown in Figs. 5 and 7, link plate 11 is formed of two abutting metal plates 12 or the like, which are each other's mirror image and on each of which various parts of the operating mechanism are formed in mirror image of each other. This also applies to guideway 10, which is formed on either side of link plate 11 by moulding plastic material on laterally projecting flanges 13 of the metal plates 12 (see Fig. 7).

On the front side, the metal plates 12 of the link plate 11 widely diverge, forming legs 14, on the lower ends of which sliding shoes 15 are moulded, which sliding shoes are accommodated in associated grooves 16 of the guide rail and which are formed such that they are not only capable of sliding movement but also allow rotation about a transverse axis, so that the sliding shoes 15 at the same time serve as pivots. This leads to a reduction of the number of parts.

Disposed some distance behind the front sliding shoes 15 is a correction mechanism 17, which causes panel 4 to move slightly rearwards upon pivoting from the closed position which is shown in Fig. 2 to the ventilating position which is shown in Fig. 1, so as to detach a seal 18 on the front side of panel 4 from the edge of the fixed roof 1, thus to prevent said seal 18 from being exposed to high shearing forces upon being moved downwards slightly due to the pivoting movement of panel 4. Said correction mechanism 17 comprises cams 19 formed on both metal plates 12 of link plate 11, which cams are in engagement with camways 20 formed on a link slide 21 which will be explained in more detail yet. The link slide remains stationary during pivoting movement of panel 4 and moves along when the panel moves in the longitudinal direction of guide rail 5, so that cams 19 and camways 20 can remain in constant engagement with each other because cams 19 allow rearward movement of panel 4 in a lowermost position in camways 20.

Said link slide 21 cooperates with the driving slide 6 in various manners. Driving slide 6 and link slide 21 are indeed guided in two separate, adjoining guideways 5' and 5'' of guide rail 5, but driving slide 6 is guided along an upright flange 32 between the two guideways 5' and 5'', and projects laterally into guideway 5''. Besides first guide member 9, arm 7 of driving slide 6, which extends above guideway 5'', also has a second guide member 22, likewise in the form of dual cams engaging round a second guideway 23 on link slide 21. Dual second guide members 22 and second guideways 23 are used again, wherein the guideways 23 are facing ribs between which the two twin cams of the second guide member 22 are positioned (see Fig. 7). The guideways 10 and 23 are substantially the same length, whilst they are furthermore disposed at least substantially above each other and exhibit approximately the same slope, albeit in opposite direction. The guideways 10 and 23 are so formed and positioned that they can at least partially overlap upon pivoting movement of link plate 11 under the influence of the movement of the first and the second guide member 9, 22 of arm 7 along guideway 10. The sliding block of the arm 7 in which the guide members 9 and 22 are formed is capable of transmitting forces being exerted on panel 4 directly to the link slide 21, as a result of which arm 7 is hardly loaded, if at all, and a very stable support of the panel can be ensured. This effect is further enhanced by the dual construction of guide members 9, 22 and guideways 10, 23.

As already mentioned before, link plate 21 only moves so as to enable movement of panel 4 in longitudinal direction, it must remain stationary during the other movements of panel 4 in vertical direction, and consequently driving slide 6 must move relative to link slide 21 in that case. When panel 4 moves in longitudinal direction, driving slide 6 and link slide 21 move as one unit.

Special locking, coupling and operating means are provided for locking and releasing link slide 21. As is shown in the various figures, a locking and coupling member 24 is present on link slide 21. Said member 24 comprises a locking cam 25, which is formed on the rear end of an arm 26, which arm 26 is pivotally connected to link slide 21 by means of a horizontal transverse pivot. In the frontmost position of link slide 21 (and of panel 4), the locking cam 25 can come into engagement with a locking recess 28 in a horizontal flange 29 of guide rail 5. The locking and coupling member 24 can be directly actuated by driving slide 6, whereby link slide 21 and guide rail 5 can be interlocked or be released from each other whilst driving slide 6 and link slide 21 can be released from each other or be interlocked, respectively, simultaneously therewith. To this end an operating pin or cam 30 extending towards link slide 21 and projecting above guideway 5'' is formed on driving slide 6, which can come into engagement with an operating and coupling slot 31 on locking and coupling member 24 at the location of the locking cam 25 on the free end of arm 26. Pin 30 slides over the upper side of arm 26 before engaging in slot 31, thus retaining the locking cam 24 in its position in locking recess 28. Slot 31 has an open front end with a horizontal entry portion and a downwardly sloping operating and coupling portion, which causes a locking cam 25 to move in vertical direction when the horizontally moving pin 30 passes through slot 31. When the locking cam 25 has moved out of recess 28 and link slide 21 has moved to the rear, the locking cam 25 will slide onto the horizontal flange 29 of guide rail 5, thus blocking a downward return movement of locking cam 25. This causes pin 30 to be retained in the sloping portion of slot 31 and effects a locking engagement between driving slide 6 and link slide 21. In order to have the transmission of forces between driving slide 6 and link slide 31 take place directly rather than via arm 26 and the transverse pivot, at least in rearward direction, another cam (not shown) may be formed on link slide 21, on which part of the driving slide 6 engages.

The operation of the illustrated embodiment of the open roof construction according to the invention is in principle similar to that of the embodiment described in Dutch patent application No. 1009773, so that reference is made to said prior patent application for a further explanation thereof.

From the foregoing it will be understood that the invention provides an open roof construction which is remarkable for its simplicity and a small overall height on the one hand and which provides a stable support on the other hand, whilst the compensation mechanism is solid and stable and does not add to the overall height.

The invention is not restricted to the above-described embodiment as shown in the drawing, which can be varied in several ways without departing from the scope of the invention. Thus the invention can also be used with other kinds of open roof constructions such as tilt roofs, spoiler roofs and other types of roofs comprising panels or different single or multiple closure elements. The vertically adjustable part of the driving slide could also be in engagement with the guideways in the form of guide slots of the closure element and the stationary part. The guide members and the guideways could also be kinematically reversed.

The invention is not restricted to the above-described embodiment as shown in the drawing, which can be varied in several ways without departing from the scope of the invention.

## Claims

1. An open roof construction for a vehicle having an opening (2) in its fixed roof (1), comprising a stationary part (3) to be fixed to the roof, an adjustable closure element (4) supported by said stationary part, which is adjustable between a closed position, in which it closes the roof opening, and an open position, in which it opens the roof opening on the front side, wherein said stationary part includes at least one guide rail (5) extending in the longitudinal direction of the vehicle, whilst the closure element is fitted with a pivot member (15) near its front side and is slidably supported by at least one sliding shoe (15) which is capable of movement in said guide rail, wherein a correction mechanism (17) is disposed some distance behind the front sliding shoe for moving the closure element slightly in the longitudinal direction of the guide rail (5) upon pivoting movement thereof about the pivot element (15), whilst an operating mechanism for the closure element (4) is provided, which is arranged for effecting the pivoting movement of the closure element and a movement of the closure element in the longitudinal direction of the guide rail (5), which operating mechanism includes an element (21) which remains at least substantially stationary during the pivoting movement of the closure element (4) and which moves along when the closure element is being moved, **characterized in that** the correction mechanism (21) includes a cam (19) and camway (20) assembly, wherein one element of said cam (19) and camway (20) assembly is connected to the panel and the other element is formed on the aforesaid element (21) of the operating mechanism.

2. An open roof construction according to claim 1, wherein the cam (19) and the camway (20) of said assembly are in constant engagement with each other.

3. An open roof construction according to claim 1 or 2, wherein said cam (19) is formed on said closure element (4) and said camway (20) is formed on the element (21) in the form of a link slide.

4. An open roof construction according to any one of the preceding claims, wherein the closure element (4) is a panel of a sliding-tilt roof, which can be pivoted from the closed position, on the one hand to a ventilating position and on the other hand downwards and rearwards to a position under the fixed roof 1.

5. An open roof construction according to claim 4, wherein the operating mechanism includes a driving slide (6), which is in engagement, with a vertically adjustable element (7) thereof, with a guideway (23) on the panel (4) and with a guideway on a links slide (21) guided in said guide rail (5), which link slide includes a locking member (25) which locks the link slide in position with respect to the guide rail during pivoting movement of the panel (4), and which can be released by the driving slide (6) at the transition to movement in longitudinal direction of the panel (4), and wherein the camway (20) of the correction mechanism (17) is formed on said link slide (21).

6. An open roof construction according to any one of the preceding claims, wherein said assembly comprises dual cams (19) and dual camways (20), which are positioned in opposing relationship, seen in transverse direction, on either side of a link plate (11) on the closure element (4).

7. An open roof construction according to any one of the preceding claims, wherein the front pivot member (15) is a sliding shoe (15).

8. An open roof construction according to any one of the preceding claims, wherein the closure element (4) is provided on both longitudinal sides thereof with dual link plates (11) with dual pivot members (15), dual operating mechanisms and/or dual correction mechanisms (17).

9. An open roof construction for a vehicle having an opening (2) in its fixed roof (1), comprising a stationary part (3) to be fixed to the roof, an adjustable closure element (4) supported by said stationary part, which is adjustable between a closed position, in which it closes the roof opening, and an open position, in which it opens the roof opening on the front side, wherein said stationary part includes at least one guide rail (5) extending in the longitudinal direction of the vehicle, whilst the closure element is fitted with a pivot member (15) near its front side and is slidably supported by at least one sliding shoe (15) which is capable of movement in said guide rail, whilst a correction mechanism (17) is disposed some distance behind the front sliding shoe, **characterized in that** said sliding shoe (15) is formed such that it also functions as a pivot (15).
